# EUROPÄISCHE PATENTSCHRIFT

(11) **EP 1 284 533 B1**
(45) Veröffentlichungstag und Bekanntmachung des Hinweises auf die Patenterteilung: **17.03.2010**
(21) Anmeldenummer: 02012654.6
(22) Anmeldetag: 07.06.2002
(51) Int. Cl.: H02G 3/04

(54) **Verdrahtungskanal**
Cable channel
Canalisation pour cablage

(30) Priorität: 18.08.2001 DE 20113694 U
(43) Veröffentlichungstag der Anmeldung: 19.02.2003
(73) Patentinhaber: Tehalit GmbH, 67716 Heltersberg (DE)
(72) Erfinder: Ostertag, Christian, 67240 Bischwiller (FR); Eberle, Patrick, 66292 Riegelsberg (DE); Weimer, Marcus, 67715 Geiselberg (DE)
(74) Vertreter: Patentanwälte Möll, Bitterich & Dr. Keller

(56) Entgegenhaltungen:
- DE-A- 1 440 231
- DE-A- 19 828 082
- DE-U- 1 851 657
- US-A- 3 321 571

## Beschreibung

Die Erfindung betrifft Verdrahtungskanäle gemäß dem Oberbegriff des Anspruchs 1.

Verdrahtungskanäle sind seit vielen Jahrzehnten in den unterschiedlichsten Varianten bekannt und in Gebrauch. Man vergleiche beispielsweise US 2 896 009, angemeldet 1955, US 2 921 607, FR 1 213 786, FR 11 77 110, FR 1 224 204, DE 1 829 069U, DE-AS 1 440 231, DE-AS 1 440 237, DE 1 848 965U, DE 2 002 912A, DE 27 14 885C, DE 30 14 695A, EP 0315 531B, FR 2 691 227A, EP 0 570 272B und DE 198 28 082A, angemeldet 1998. Alle diese Verdrahtungskanäle besitzen einen Boden, zwei Seitenwände, die durch senkrecht zum Boden verlaufende Schlitze zu Zungen umgeformt sind, Deckelhalteprofile an den freien Längskanten der Seitenwände und gegebenenfalls einen Deckel, der auf die Deckelhalteprofile der Seitenwände lösbar aufgesetzt werden kann.

Verdrahtungskanäle werden überwiegend in Schaltschränken eingesetzt, wo sie die ordentliche Verlegung von Drähten und Leitungen ermöglichen. Dabei haben die Schlitze in den Seitenwänden die Aufgabe, das Ein- und Ausführen von Drähten und Leitungen zu ermöglichen.

Falls Kabel ein- oder ausgeführt werden müssen, die einen größeren Querschnitt haben als die Schlitzbreite, können einzelne Zungen abgebrochen werden. Um dieses Abbrechen zu erleichtern, sind die Zungen der in der DE-AS 14 40 231 und der DE-AS 14 40 237 offenbarten Verdrahtungskanäle mit Sollbruchstellen versehen, die das saubere Abbrechen der Zungen auch ohne Zuhilfenahme eines Werkzeugs ermöglichen sollen.

Analysiert man die in den oben genannten Druckschriften offenbarten Verdrahtungskanäle, so stellt man fest, dass die in die Seitenwände eingearbeiteten Schlitze ausnahmslos ein gutes Stück oberhalb des Bodens enden. Beim Abbrechen einer Zunge bleibt somit ein oftmals störendes Stück Seitenwand stehen.

Falls die Verdrahtungskanäle mit einem Deckel verschlossen werden, muss der Form der Deckelhalteprofile besondere Aufmerksamkeit geschenkt werden. Durch die regelmäßig eingebrachten Schlitze ist die Stabilität der Seitenwände bereits reduziert. Darüber hinaus muss in Schaltschränken mit erhöhten Temperaturen gerechnet werden, was zu einer weiteren Verringerung der Elastizität der Zungen führt. Um auch unter ungünstigen Umständen ein selbsttätiges Lösen des Deckels zu verhindern, werden die Zungen, die Deckelhalteprofile und der Deckel so dimensioniert, dass die Profile sich breitflächig überlappen und die Zungen bei aufgesetztem Deckel eine große Vorspannung erhalten. Dadurch wird jedoch das Aufsetzen und Abnehmen des Deckels erschwert und insbesondere der für die Aufnahme von Drähten und Leitungen zur Verfügung stehende Innenraum der Verdrahtungskanäle verringert.

Der vorliegenden Erfindung liegt daher die Aufgabe zugrunde, einen Verdrahtungskanal der eingangs genannten Art derart weiterzubilden, dass für das Ein- und Ausführen von Kabeln und Drähten ein optimales Platzangebot zur Verfügung steht, wobei gleichzeitig die Möglichkeit geschaffen wird, Zusatzelemente wie Trennwände und dergleichen zu verwenden.

Diese Aufgabe wird gelöst durch einen Verdrahtungskanal mit den Merkmalen des Anspruchs 1.

Durch das Verlängern der Schlitze in den Seitenwänden bis in den Bodenbereich können Kabel und Drähte nunmehr über die volle Höhe der Seitenwand ein- und ausgeführt werden. Beim Abbrechen einer Zunge ergibt sich eine Öffnung, die bodengleich ist. Die durch die Verlängerung der Schlitze bis in den Bodenbereich hinein erfolgte Schwächung der Festigkeit des Bodens wird durch die mindestens eine Längsleiste mehr als ausgeglichen, insbesondere dadurch, dass diese wenigstens eine Längsleiste, wobei es sich gemäß einer bevorzugten Weiterbildung um zwei parallele Längsleisten handelt.

Um eine definierte Bruchstelle zum Abbrechen der Zungen zu schaffen, können wie an sich bekannt Sollbruchstellen angeformt werden, jetzt jedoch im Bodenbereich.

Wie an sich bekannt, kann auch der erfindungsgemäße Kanal aus einem thermoplastischen Kunststoff hergestellt sein.

Vorteilhafterweise ist die den Boden verstärkende Längsleiste als Halteleiste ausgebildet, auf die Zusatzteile wie Trennwände und dergleichen aufgerastet werden können.

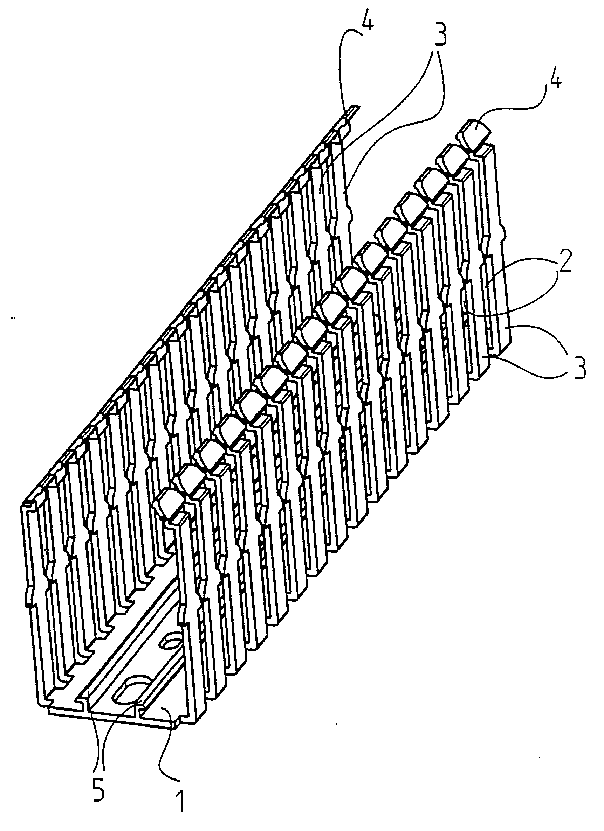

Anhand der Zeichnung soll die Erfindung in Form von Ausführungsbeispielen näher erläutert werden.

Die Zeichnung zeigt in isometrischer Darstellung einen Verdrahtungskanal mit U-förmigem Querschnitt. Er besitzt einen Boden 1, zwei Seitenwände, die durch regelmäßig eingearbeitete, senkrecht zum Boden verlaufende Schlitze 2 zu Zungen 3 umgeformt sind, und Deckelhalteprofile 4 an den freien Längskanten der Seitenwände bzw. Zungen 3. Die Schlitze 2 sind über die Seitenwände hinaus bis in den Boden 1 hinein verlängert. Wird eine Zunge 3 abgebrochen, um das Ein- oder Ausführen von Kabeln mit großem Querschnitt zu ermöglichen, so bricht sie im Bodenbereich und es entsteht eine bodengleiche Kabelauslassöffnung mit maximal großem Querschnitt. Gegebenenfalls kann die Bruchstelle durch eine eingearbeitete Sollbruchlinie definiert vorgegeben werden.

Um die aufgrund der Schlitze 2 verringerte Stabilität des Bodens 1 wieder herzustellen, sind auf dessen Innenseite zwei parallele Längsleisten 5 angebracht. Diese sind so geformt, dass sie als Halteleisten dienen können, auf die Zusatzteile wie Trennwände oder dergleichen aufgerastet werden können.

## Patentansprüche

1. Verdrahtungskanal, im wesentlichen umfassend
- einen Boden (1),
- Seitenwände, die durch senkrecht zum Boden (1) verlaufende Schlitze (2) zu Zungen (3) umgeformt sind,
- Deckelhalteprofile (4) an den Seitenwänden
- und gegebenenfalls einen Deckel (10), lösbar aufzusetzen auf die Seitenwände, **gekennzeichnet durch** die Merkmale:
- die Schlitze (2) sind über die Seitenwände hinaus bis in den Boden (1) verlängert,
- der Boden (1) ist **durch** wenigstens eine Längsleiste (5) verstärkt.

2. Verdrahtungskanal nach Anspruch 1, **gekennzeichnet durch** das Merkmal:
- es sind zwei parallele Längsleisten (5) vorgesehen.

3. Verdrahtungskanal nach Anspruch 1 oder 2, **gekennzeichnet durch** das Merkmal:
- die Zungen (3) besitzen im Bodenbereich angeformte Sollbruchstellen.

4. Verdrahtungskanal nach Anspruch 1, 2 oder 3, **gekennzeichnet durch** das Merkmal:
- Kanal (1, 3, 4, 5), Deckel (10) und/oder Halter (20) bestehen aus thermoplastischem Kunststoff.

5. Verdrahtungskanal nach einem der Ansprüche 1 bis 4, **gekennzeichnet durch** das Merkmal :
- die Längsleiste (5) ist als Halteleiste für die lösbare Befestigung von Zusatzteilen (20) wie Trennwänden oder dergleichen ausgebildet.

## Claims

1. A wiring conduit, essentially comprising
- a base (1)
- side walls (12) which are transformed into tongues (3) by slots (2) extending perpendicularly to the base (1),
- cover-retaining profiles (4) on the side walls
- and optionally a cover (10) to be detachably fitted on the side walls,
**characterised by** the features:
- the slots (2) are extended beyond the side walls as far as into the base (1),
- the base (1) is reinforced by at least one longitudinal strip (5).

2. A wiring conduit according to Claim 1, **characterised by** the feature:
- two parallel longitudinal strips (5) are provided.

3. A wiring conduit according to Claim 1 or 2, **characterised by** the feature:
- the tongues (3) have predetermined breaking points integrally formed in the base region.

4. A wiring conduit according to Claim 1,2 or 3, **characterised by** the feature:
- conduit (1,3,4,5), cover (10) and/or retainer (20) consist of thermoplastic synthetic material.

5. A wiring conduit according to any one of Claims 1 to 4,
**characterised by** the feature:
- the longitudinal strip (5) is in the form of a retaining strip for the detachable fastening of auxiliary components (20), such as dividing walls or the like.

## Revendications

1. Caniveau de câblage, comprenant pour l'essentiel :
- un fond (1),
- des parois latérales, qui sont mises sous forme de languettes (3) par des fentes (2) s'étendant perpendiculairement au fond (1),
- des profils (4) de maintien de couvercle sur les parois latérales,
- et éventuellement un couvercle (10), à mettre en place de manière amovible sur les parois latérales,
**caractérisé par** les caractéristiques suivantes :
- les fentes (2) sont prolongées au-delà des parois latérales jusque dans le fond (1),
- le fond (1) est renforcé par au moins une barrette longitudinale (5).

2. Caniveau de câblage selon la revendication 1, **caractérisé par** la caractéristique suivante :
- il est prévu deux barrettes longitudinales parallèles (5).

3. Caniveau de câblage selon la revendication 1 ou 2, **caractérisé par** la caractéristique suivante :
- les languettes (3) possèdent des points de rupture privilégiée formés dans la région du fond.

4. Caniveau de câblage selon la revendication 1, 2 ou 3, **caractérisé par** la caractéristique suivante :
- le caniveau (1, 3, 4, 5) le couvercle (10) et/ou les éléments de maintien (20) sont réalisés en matériau thermoplastique.

5. Caniveau de câblage selon l'une des revendications 1 à 4, **caractérisé par** la caractéristique suivante :
- la barrette longitudinale (5) est conçue comme barrette de maintien pour la fixation amovible d'éléments supplémentaires (20) tels que des parois séparatrices ou analogues.
